# EUROPEAN PATENT APPLICATION

(11) **EP 1 051 018 A2**
(43) Date of publication of application: **08.11.2000**
(21) Application number: 00303460.0
(22) Date of filing: 25.04.2000
(51) Int. Cl.: H04M 3/533, H04M 7/00

(54) **Voice messaging system which retrieves and stores voice messages from another voice messaging system**

(30) Priority: 05.05.1999 US 305208
(71) Applicant: LUCENT TECHNOLOGIES INC., Murray Hill, New Jersey 07974-0636 (US)
(72) Inventor: Cannon, Joseph M., Harleysville, Pennsylvania 19438 (US); Johanson, James A., Emmaus, Pennsylvania 18049 (US); Mooney, Phillip D., North Wales, Pennsylvania 19454 (US)
(74) Representative: Watts, Christopher Malcolm Kelway, Dr.

(57) **Abstract**

Apparatus and method to provide downloading and retrieval of a voice message from a voice mailbox of a voice messaging system associated with a telephone company central office for storage and playback by a telephone answering device at the user's home or office. The telephone answering device includes a voice mail retrieval module which automatically communicates with the central office in response to the receipt of a voice message waiting indicator (VMWI) or similar signal. Alternatively, the voice messages may be downloaded upon request by the user, e.g., by activating an appropriate button or sequence of buttons on the telephone answering device. The voice messages may be downloaded from the central office in digital or analog form.

## Description

### Field of the Invention

This invention relates generally to a voice messaging system. More particularly, it relates to a voice messaging system such as a telephone answering device which is capable of retrieving and storing a voice message from a telephone company central office.

### Background of Related Art

Voice messaging systems (e.g., telephone answering devices (TADs)) are useful devices for both the home and office. Larger voice messaging systems in general work in conjunction with a central office or private branch exchange (PBX) unit to provide voice mailboxes for a large number of users. Smaller voice messaging systems, e.g., telephone answering devices typically operate on a single telephone line and answer an incoming call to an unused (i.e., on-hook) telephone after a predetermined number of rings.

Voice messaging systems and telephone answering devices cause a telephone line to enter an off-hook condition, then play an outgoing greeting message to the caller. After the outgoing greeting message is completed, the caller is allowed to record a voice message on the voice messaging system, e.g., telephone answering device. At a later time, the voice message is replayed by the user, either local to the telephone answering device or via remote connection from another telephone through the public switched telephone network (PSTN).

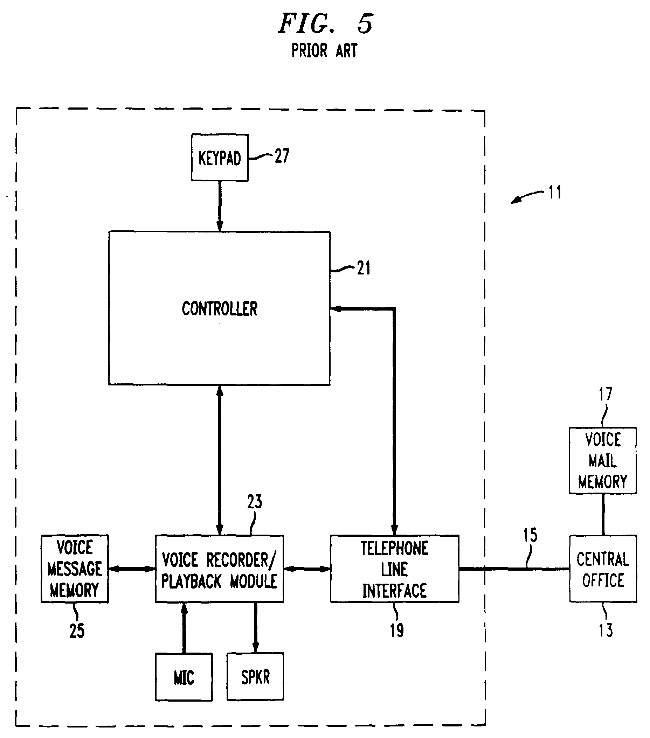

Fig. 5 illustrates a conventional telephone answering device capable of answering an incoming telephone call on a telephone line.

In Fig. 5, a telephone answering device **11** is connected to a telephone company central office **13** via a telephone line **15**. The telephone company central office **13** is connected to voice mail services including voice message memory **17** for retrieving and/or storing voice messages at the telephone company central office **13**. The voice mail services provided by the telephone company central office **13** are typically an optional feature for the telephone customer to establish a voice message mailbox associated with their telephone number.

A telephone line interface (TLI) **19** in the telephone answering device **11** provides the conventional isolation, DC and AC impedance as required by telephone company standards. The telephone line interface **19** also provides a ring detect signal to a controller **21**. The controller **21** may be any suitable processor, e.g., a microprocessor, a microcontroller, or a digital signal processor (DSP). The ring detect signal indicates to the controller **21** the ringing of an incoming telephone call on the telephone line **15**.

After a predetermined number of ring signals typically set at the voice messaging system or telephone answering device **11**, the controller **21** causes the telephone line interface **19** to place the telephone line **15** in an off-hook state. A voice recorder/playback audio module **23** plays an outgoing greeting message over the telephone line **15** to the caller. Upon completion of the outgoing greeting message, the caller is typically allowed to leave a voice message in a voice message memory **25** under the control of the controller **21**. The voice message memory **25** is typically formed in appropriate non-volatile memory, e.g., Flash memory.

A keypad **27** allows the user to select various modes of operation, including the playback of voice messages received by the telephone answering device **11** and stored in the voice message memory **25**.

Voice mail service provided at a central office establishes a voice message mailbox corresponding to the telephone line **15**.

The telephone answering device or central office voice mail services each have particular advantages. For instance, a telephone answering device allows message retrieval independent of the service from a telephone company, allows call screening, and allows multiple mailboxes, and the potential for programmable filtering of messages. Outgoing greeting messages can be easily updated, and the telephone answering device can be operated with single button convenience. On the other hand, voice mail services provided by a central office allow voice messages to be recorded even when the telephone line **15** is busy, and/or when the telephone answering device is busy or full. Moreover, voice mail services allow voice message recording even during a power failure or phone service outage, and allow voice messages to be recorded without actually ringing the telephone line **15**.

Unfortunately, a user must either select between the advantages provided by a telephone answering device or a voice mail system at a central office, missing out on the advantages of the other, or must utilize both, and endure the continuing burden of checking voice messages from two sources. Thus, although telephone answering devices and voice mail services each have their own advantages, it is difficult for telephone customers to utilize both. This is because of the inconvenience of requiring the telephone customer to retrieve recorded voice messages from two different message recording sources, i.e., from the telephone answering device and from their voice mailbox at the central office. To be sure that they have received all voice messages, the telephone customer would need to check both the telephone answering device **11** and their voice mail service at the telephone company central office **13**. Moreover, the voice messages may be retrieved by the telephone customer in an order or priority different from their actual chronological order or priority as determined by the respective telephone answering device **11** or voice mail service at the telephone company central office **13**.

Accordingly, there exists a need for an improved voice messaging technique which allows convenient storage and retrieval of voice messages from both a telephone answering device and a voice mail system at a telephone company central office.

### Summary Of The Invention

In accordance with the principles of the present invention, a voice messaging system comprises a telephone line interface, a controller, and a voice mail retrieval module adapted to download a voice message or messages originally recorded by another voice messaging system from a telephone company central office over a telephone line to the voice messaging system. A voice message memory stores the downloaded voice message or messages in the voice message memory. The voice message originally recorded by the another voice messaging system is available for playback at the voice messaging system.

A method of retrieving a voice message from a first voice messaging system for playback at a second voice messaging system in accordance with another aspect of the present invention comprises originally recording a voice message at a first voice messaging system. The voice message is downloaded to voice message memory at a second voice messaging system. The voice message is played back from the second voice messaging system.

### Brief Description Of The Drawings

Features and advantages of the present invention will become apparent to those skilled in the art from the following description with reference to the drawings, in which:

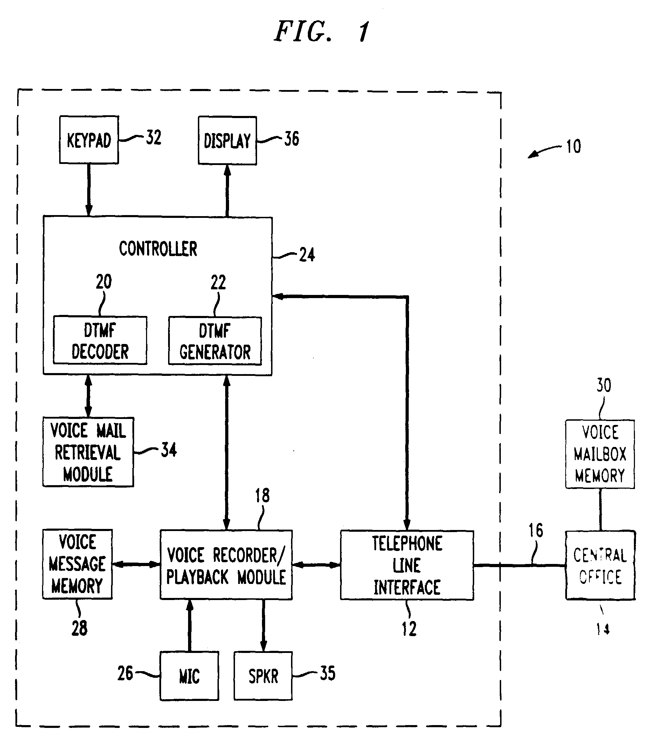

Fig. 1 illustrates an exemplary embodiment of a telephone answering device which allows a user to retrieve voice messages from their voice mailbox memory at a telephone company central office and store the same in voice message memory of their local telephone answering device, in accordance with the principles of the present invention.

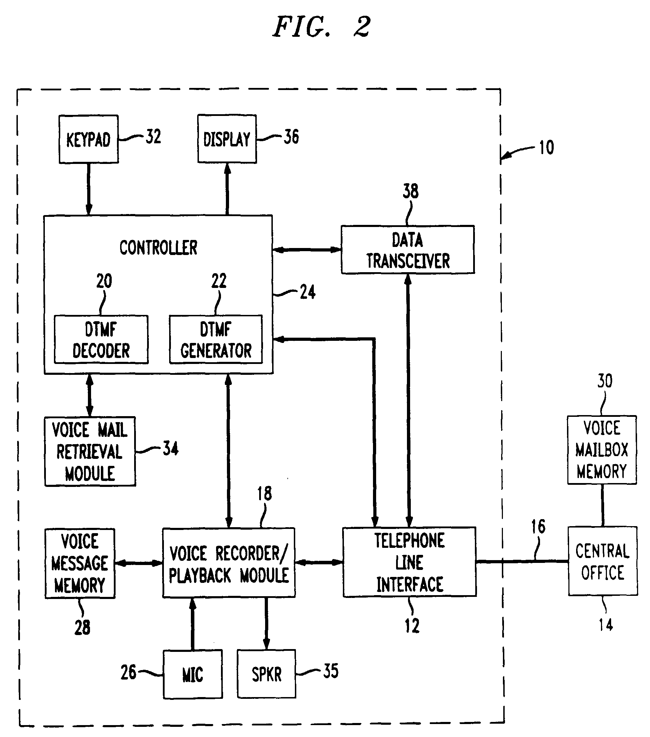

Fig. 2 shows an alternative embodiment in accordance with the principles of the present invention wherein voice messages are digitally downloaded from the voice mailbox memory of the central office to the telephone answering device, and stored in appropriate voice message memory.

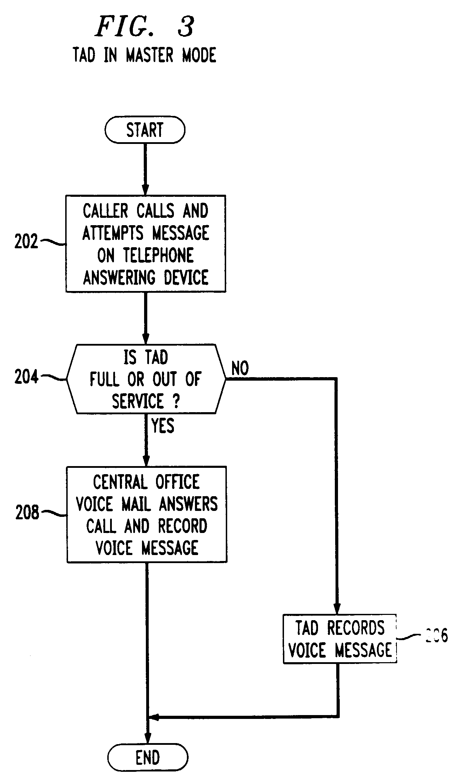

Fig. 3 is a flow chart illustrating an exemplary process by which a telephone answering device shown in Fig. 1 records voice messages from callers in a master mode, with a voice mail service at a telephone company central office providing backup recording of messages when the telephone answering device is otherwise unable to record a voice message.

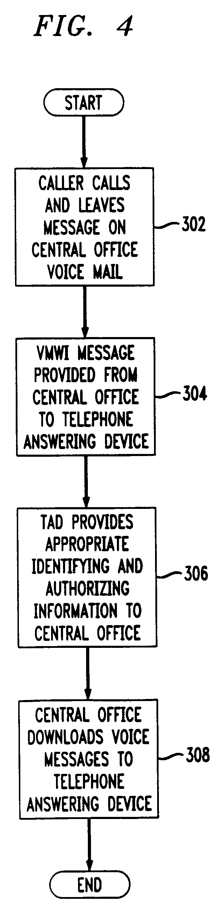

Fig. 4 is a flow chart illustrating an exemplary process by which a telephone answering device, e.g., as shown in Fig. 1, responds to the receipt of a VMWI signal from a telephone company central office by requesting download of voice messages stored in the voice mailbox memory at the telephone company central office, in accordance with the principles of the present invention.
Fig. 5 illustrates a conventional telephone answering device which records voice messages in voice message memory.

### Detailed Description Of Illustrative Embodiments

The present invention provides a telephone answering device and method for allowing a calling party to conveniently retrieve voice messages recorded either on their telephone answering device or from a voice messaging system service provided by a local telephone company central office. In accordance with the principles of the present invention, the telephone answering device is capable of automatically retrieving and storing voice messages recorded in a voice mailbox at a telephone company central office for convenient playback to the user from their telephone answering device.

In particular, a calling party may leave a voice message, either in a telephone answering device or a voice mailbox in an appropriate voice messaging system service at the central office without being aware of which one was being used. In either case, the telephone answering device is capable of playing back all voice messages to the user, whether originally recorded by the telephone answering device or at the central office.

For instance, when a telephone answering device answers an incoming telephone call, the telephone answering device places the telephone line in an off-hook condition and initiates a standard outgoing greeting message. Thereafter, the calling party leaves a voice message on the telephone answering device, which is stored in voice message memory via a voice recorder/playback module.

If the voice message memory of the telephone answering device is full or otherwise disabled, or for other reasons, voice messaging system services at the telephone company central office which the telephone customer is subscribed may record and store a voice message from the calling party in appropriate voice mail memory. However, in accordance with the principles of the present invention, once the voice message memory of the telephone answering device has storage room, has more storage room than the central office's voice mail system, or is otherwise enabled to accept new voice messages, it becomes available to receive and store the voice message originally recorded at the central office.

In accordance with the principles of the present invention, the voice message recorded at the central office is retrieved by the telephone answering device in response to the telephone answering device receiving a voice message waiting indicator (VMWI) or similar signal. In response to the receipt of the VMWI signal, the telephone answering device automatically without user intervention required causes the telephone line **16** to go into an off-hook condition and communicates with the central office, e.g., using a predetermined sequence of dual tone, multiple frequency (DTMF) tones generated by a DTMF generator. The download voice message request comprises this predetermined sequence of DTMF tones, and may be any unique command sequence, e.g., "#123". Alternatively, a PLAY button can be pressed on the relevant telephone answering device, and the telephone answering device would in response playback the appropriate locally stored voice messages, and dial or otherwise establish communications with the central office to retrieve and playback the voice messages stored at the central office as well.

In response to this download voice messages request from the telephone answering device to the voice messaging system service of the central office, the telephone company central office then downloads the voice messages stored in the voice mail memory, with appropriate delineation between the download of separate messages, for storage in the voice message memory of the telephone answering device.

Although the present invention is shown embodied in a telephone answering device, the present invention is equally applicable to voice messaging systems in general.

Fig. 1 illustrates a telephone answering device, indicated generally at **10**, capable of recording a voice message from a calling party, and/or downloading and storing a voice message originally recorded on a voice messaging system at the telephone company central office, and capable of allowing a user to play back the voice messages originally recorded at the central office from the telephone answering device, in accordance with the principles of the present invention.

In the embodiment of Fig. 1, the telephone answering device **10** includes at least one telephone line interface **12** for interconnection with a telephone company central office **14** via a telephone line **16**. The telephone company central office **14** is connected to an appropriate voice messaging system including voice mailbox memory **30** in which voice messages originally recorded by the voice messaging system of the central office are stored. The voice mail services provided by the telephone company central office **14** are typically an optional subscription feature for the telephone customer. The telephone line interface **12** interconnects the telephone line **16** with a voice recorder/playback module **18**.

In operation, after a desired number of ring signals, the telephone answering device **10** causes the telephone line interface **12** to place the telephone line **16** in an off-hook state, and instructs the voice recorder/playback module **18** to play an outgoing greeting message on the telephone line **16** to the calling party. The user can, if desired, locally record a customized outgoing greeting message into the telephone answering device **10** through a microphone **26** connected to the voice recorder/playback module **18**. The recorded outgoing greeting message is stored in a voice message memory **28** along with voice messages received by the telephone answering device **10**. The voice message memory **28** may be any appropriate memory, and is preferably non-volatile memory, e.g., Flash memory. Upon completion of the outgoing greeting message being played to the calling party, the calling party is typically allowed to record a voice message in the voice message memory **28** under the control of a controller **24**.

The controller **24** controls the functions of the telephone system **10** and is typically a processor, e.g. a microprocessor, a digital signal processor (DSP), or a microcontroller.

The telephone answering device **10** of the present invention further includes a dual tone, multiple frequency (DTMF) generator **20** and a DTMF decoder **22**, which may or may not be implemented within the controller **24**. The DTMF generator **20** provides touch tone signals for use by the telephone answering device **10** to dial out on the telephone line **16**, and the DTMF decoder **22** provides a conventional mechanism for detection of commands input via a DTMF keypad **32**. The keypad **32** also allows the user to select various modes of operation, including the playback of voice messages stored in the voice message memory **28** through a speaker **35** connected to the voice recorder/playback module **18**.

Importantly, the telephone answering device **10** illustrated in Fig. 1 further includes a voice mail retrieval module **34**. The voice mail retrieval module **34** allows voice messages originally recorded at a telephone company central office to be downloaded to the telephone answering device for storage in the associated voice message memory **28**.

The voice mail retrieval module **34** may be an appropriate application running on the controller **24**, or separate from the controller **24** but nevertheless preferably in communication with the controller **24**. The controller **24** passes VMWI information on to the voice retrieval module **34**, which is responsible for initiating the retrieval and local storage of the voice messages originally recorded at the central office. Voice message waiting indicator signals are typically provided by an optional service offered by many telephone company central offices **14**.

Accordingly, upon receipt of the indication that at least one voice message is stored in voice mailbox memory **30** associated with a voice messaging system at the central office **14**, the voice mail retrieval module **34** causes the telephone line interface **12** to place the telephone line **16** in an offhook condition, and causes the DTMF generator **22** to output an appropriate command and password to allow downloading of voice messages. At an appropriate time after outputting the voice message download request) the voice mail retrieval module **34** starts the recording process of the voice recorder/playback module **18** such that as the voice messaging system of the central office **14** plays back the retrieved voice message(s), the same are rerecorded into the local voice message memory **28**. Alternatively, to maintain voice quality, the encoded voice data may be sent via digital communications such as frequency shift keying (FSK), quadrature amplitude modulation (QAM), etc., and stored on a local telephone answering device.

Additionally, the voice mail retrieval module **34** may cause an appropriate audible or visual indicator to be associated with the downloaded voice messages so that the user, upon playback of the particular voice message, will be informed as to its origination, i.e., from the voice mail maintained at the central office.

Preferably, to avoid inconvenient interference with the telephone answering device **10** as it is downloading voice messages from the voice mail service at the central office over the telephone line **16**, the automatic downloading may occur at an off hour, e.g., in the middle of the night when it is less likely that the user would need to use the telephone line, or after a preset amount of inactivity. Of course, the voice mail service can record any voice messages from callers who might attempt to call the user while the downloading is taking place. The telephone answering device **10** may also include a visual indicator such as a red LED indicating that a downloading of voice mail is actively taking place.

The present invention provides a seamless tie between voice messaging systems. For instance, a users telephone answering device **10** is disabled by, e.g., voice message memory **28** which is already filled to capacity, the voice mail services at the telephone company central office **14** can fill in by answering incoming telephone calls not answered by the users telephone answering device **10**. Thereafter, when the telephone answering device **10** is again able to receive voice messages, the voice mail retrieval module **34** of the telephone answering device **10** can be activated to voice messages from the telephone company central office **14** for playback at the telephone answering device **10**.

If a plurality of voice messages are to be downloaded from the telephone company central office **14** to the telephone answering device **10**, an appropriate delineation signal, e.g., a predetermined DTMF tone or sequence of tones, might be used to instruct the telephone answering device **10** to end recording the previous voice message and begin recording a next voice message. Alternatively, a plurality of voice messages downloaded from the telephone company central office **14** to the telephone answering device **10** can be recorded by the telephone answering device **10** as a single retrieved message.

The voice messages retrieved by the telephone answering device **10** from the telephone company central office **14** can be retrieved in either analog form or digital form. Fig. 1 shows an example embodiment implementing analog retrieval of voice messages from the central office **14**. Fig. 2 shows an alternative embodiment of a telephone answering device wherein voice messages are downloaded from the central office in digital form.

In particular, in analog download, the telephone company central office **14** plays the downloaded voice message originally recorded at the central office over the telephone line **16** to the telephone answering device **10**, which re-records the same voice message in an otherwise conventional fashion for storage using the compression algorithms associated with the particular telephone answering device **10**. However, if there is encoding/decoding commonality between the compression encoding algorithms used for recording the voice message at the central office and the compression decoding algorithms used by the telephone answering device **10**, or if a conversion routine is implemented between differing compression algorithms, then the voice messages may be downloaded in digital form from the voice mailbox memory **30** of the central office **14** for storage in the voice message memory **28** of the telephone answering device **10**. As shown in Fig. 2, an appropriate data transceiver **38** included in the telephone answering device **10** otherwise shown in Fig. 1 handles the reception of data transmitted over the telephone line **16** from a matching data transceiver at the central office **14**.

The voice messages may be downloaded through the data transceiver **38** in digital form using an appropriate technique. For example, using DTMF techniques, a very slow download of voice message data may be achieved. Using the more sophisticated and faster Frequency Shift Keying (FSK) technique, a faster download of voice message data may be achieved. Using a very fast ADSL out-of-band technique, a very fast download of voice message data may be achieved. Alternatively, a modem may be included in the telephone answering device **10** and at the central office **14** to implement, e.g., Quadrature Amplitude Modulation (QAM), which also provides a very fast download of voice message data. It should be noted that the Quadrature Amplitude Modulation Technique requires an appropriate modem, the FSK technique requires an appropriate frequency shift keying detector/receiver, and the DTMF technique would require the DTMF decoder **20** shown in Figs. 1 and 2. Each of the techniques typically requires an association of data symbols, i.e., one or more data bits, to an appropriate DTMF, frequency shift keying, or quadrature amplitude modulation signal.

Regardless of whether the voice messages are retrieved and downloaded in analog or digital form, the voice messages are preferably deleted from the voice mailbox memory **30** at the telephone company central office **14** after being successfully downloaded to the telephone answering device **10**. Successful download of each voice message may be confirmed to the central office **14** by the voice mail retrieval module **34** using an appropriate confirmation signal. Alternatively, downloaded voice messages can be deleted according to a predetermined schedule, e.g., once a month, etc.

When the voice mail retrieval module **34** is activated by the telephone answering device **10** in response to a voice message waiting indicator received from the telephone company central office **14**, the voice messages stored in the voice mail memory **30** at the telephone company central office are downloaded to the telephone answering device **10** and stored in the voice message memory **28**. The voice messages are then played by the user from the telephone answering device **10** in an otherwise conventional manner.

The telephone answering device **10** can be set by the user to act in either a master mode or a slave mode relative to the voice messaging service of the telephone company central office **14**. In a master mode, the telephone answering device **10** records all of the voice messages possible and the voice messaging services at the telephone company central office **14** acts as a backup to the telephone answering device **10**, e.g., taking over when the voice message memory **28** is full or the telephone answering device **10** is otherwise disabled. To accomplish this master relationship, the ring count of the telephone answering device **10** to answer the incoming telephone call is preferably set to a lower number than that corresponding to the corresponding voice messaging service at the telephone company central office **14**.

In a slave mode, the voice messaging service at the telephone company central office **14** records all voice messages, and the telephone answering device **10** would simply be used for convenient local retrieval of the voice messages from the central office, and for appropriate back up and/or archiving of the voice messages.

With the telephone answering device **10** in the slave mode, the telephone company central office **14** originally records voice messages destined for the telephone tine **16**, and the telephone answering device **10** subsequently (e.g., periodically, on demand of the user, etc.) downloads the voice messages from the telephone company central office **14**.

To accomplish a slave mode, the ring count of the voice messaging service at the telephone company central office **14** is preferably set to answer incoming telephone calls after a fewer number of rings than the ring count set at the telephone answering device **10**.

An example of the operation of the telephone answering device **10** shown in Fig. 1 when set in the master mode for recording voice messages on either the telephone answering device **10** or at the telephone company central office **14** is shown in Fig. 3.

In particular, with reference to Fig. 3, an incoming caller leaves a voice message on the telephone answering device **10** in step **202**. After a predetermined number of rings, the telephone answering device **10** answers the incoming telephone call by causing the telephone line interface **12** to place the telephone line **16** in an off-hook condition. The telephone answering device **10** plays an outgoing greeting message such as "I'm not available right now, please leave a message" or other similar greeting, and a voice message is recorded in otherwise conventional fashion in the voice message memory **28** of the telephone answering device **10**.

In decision step **204**, the controller **24** of the telephone answering device **10** determines whether the voice message memory **28** is full or is otherwise disabled.

If the voice message memory **28** is not full or is otherwise enabled, in step **206**, the telephone answering device **10** records a voice message from the caller in the voice message memory **28** in an otherwise conventional fashion for later retrieval and playback by the user.

In step **208**, if the voice message memory **28** is full or is otherwise disabled, the voice messaging service at the telephone company central office **14** will answer the telephone call and record the voice message in its voice mailbox memory **30**. Subsequently, the voice message is retrieved from the voice mailbox memory **30** and downloaded to the telephone answering device **10** for storage in its voice message memory **28**.

An example of the operation of the telephone answering device **10** when retrieving and downloading a voice message from the telephone company central office **14** in accordance with the principles of the present invention, regardless of whether the telephone answering device **10** is set in the master mode or the slave mode, is shown in Fig. 4.

In particular, with reference to Fig. 4, an incoming caller records a voice message in the voice mailbox memory **30** of the central office **14** as shown in step **302**.

In step **304**, a voice message waiting indicator (VMWI) signal is provided by the telephone company central office **14** to the telephone answering device **10** in conventional fashion.

In step **306**, the voice mail retrieval module **34** of the telephone answering device **10** provides appropriate identifying and authorizing information to the telephone company central office **14** to request download of the voice message(s) causing transmission of the VMWI signal.

Upon receipt of the voice message download request command, in step **308**, the telephone company central office **14** downloads the requested voice message(s) from its associated voice mail memory **30** to the telephone answering device **10** for storage in its voice message memory **28**. Subsequently, the user can playback all of their voice messages locally from their telephone answering device **10**, thus enjoying all the advantages of voice messaging systems at both the central office and at the home or office.

Accordingly, the telephone answering device **10** of the present invention provides a simplified means of retrieving and listening to voice messages from a central office.

Along with a downloaded voice message the central office 14 can provide the telephone answering device **10** with an indication as to how many (if any) additional voice messages remain in the voice mail memory **30** at the telephone company central office **14** which have not yet been downloaded to the telephone answering device **10**. Alternatively, a telephone answering device or voice mail system can communicate with each other regarding, e.g., how much memory is available, so that a decision can be made prior to a next telephone call as to which should answer the next unanswered telephone call.

With the telephone answering device **10** of the present invention, the user can benefit from the inherent advantages of having both a telephone answering device and voice mail services at the telephone company central office. Several advantages of having a telephone answering device in the home and/or office include message retrieval not dependent on phone company service, call screening, multiple mail boxes and potential for programmable filtering of voice messages, easily update outgoing voice message, and single button convenience. Several advantages of having voice mail services at the telephone company central office include voice messages recorded when telephone line is busy, voice messages recorded when telephone answering device is busy or the voice message memory is full, voice messages can still be taken during power outage or telephone service outage, and voice messages can still be recorded without actually ringing the telephone line. Therefore, the telephone answering device **10** can utilize all of the advantages of both while still providing a convenient manner of retrieval from only the telephone answering device **10** without requiring the user to connect with the voice mail services at the telephone company central office **14**.

## Claims

1. A voice messaging system, comprising:
a controller;
a voice mail retrieval module adapted to download a voice message originally recorded by another voice messaging system from a telephone company central office over a telephone line to said voice messaging system; and
a voice message memory adapted to store said downloaded voice message in said voice message memory;
wherein said voice message originally recorded by said another voice messaging system is available for playback at said voice messaging system.

2. The voice messaging system according to claim 1, wherein:
said voice message is downloaded in an analog form.

3. The voice messaging system according to claim 1, wherein:
said voice message is adapted to be deleted from a voice mailbox memory at said telephone company central office after being downloaded by said voice mail retrieval module to said voice messaging system.

4. The voice messaging system according to claim 1, wherein:
said voice message is adapted to be deleted from a voice mailbox memory at said telephone company central office in accordance with a predetermined schedule after being downloaded by said voice mail retrieval module to said voice messaging system.

5. The voice messaging system according to claim 1, wherein:
said voice mail retrieval module is activated in response to the receipt by said voice messaging system of a voice message waiting indicator indicating a voice message is stored at said telephone company central office.

6. The voice messaging system according to claim 1, wherein:
said voice mail retrieval module is further adapted to provide identifying and authorizing information to said telephone company central office.

7. The voice messaging system according to claim 1, further comprising:
a display adapted to indicate that said voice message was originally recorded by said telephone company central office.

8. The voice messaging system according to claim 1, wherein:
said voice message is downloaded in an analog form.

9. The voice messaging system according to claim 8, further comprising:
a data transceiver adapted to decode a digital transmission of said voice message from said telephone company central office.

10. The voice messaging system according to claim 9, wherein said digital transmission is encoded using one of:
DTMF techniques;
frequency shift keying techniques;
ADSL techniques; and
quadrature amplitude modulation techniques.

11. The voice messaging system according to claim 1, wherein:
said telephone company central office downloads a plurality of voice messages in response to a voice message download request from said voice mail retrieval module.

12. The voice messaging system according to claim 11, wherein:
said plurality of voice messages are downloaded in delineated form.

13. A method of retrieving a voice message from a first voice messaging system for playback at a second voice messaging system, comprising:
originally recording a voice message at a first voice messaging system;
downloading said voice message to voice message memory at a second voice messaging system; and
playing back said voice message from said second voice messaging system.

14. The method of retrieving a voice message from a first voice messaging system for playback at a second voice messaging system according to claim 13, wherein:
said second voice message memory re-records said voice message.

15. The method of retrieving a voice message from a first voice messaging system for playback at a second voice messaging system according to claim 13, further comprising:
providing an indication signal to said second voice messaging system that said voice message has been recorded by said first voice messaging system.

16. The method of retrieving a voice message from a first voice messaging system for playback at a second voice messaging system according to claim 15, wherein:
said indication signal is a voice message waiting indication (VMWI) signal.

17. The method of retrieving a voice message from a first voice messaging system for playback at a second voice messaging system according to claim 13, further comprising:
providing identifying and authorizing information to said second voice messaging system from said first voice messaging system.

18. The method of retrieving a voice message from a first voice messaging system for playback at a second voice messaging system according to claim 13, further comprising:
deleting said voice message from said first voice messaging system.

19. Apparatus for retrieving a voice message from a first voice messaging system for playback at a second voice messaging system, comprising means for carrying out the steps of a method as claimed in any of claims 13 to 18.
